# EUROPÄISCHE PATENTANMELDUNG

(11) **EP 1 227 185 A2**
(43) Veröffentlichungstag der Anmeldung: **31.07.2002**
(21) Anmeldenummer: 02001591.3
(22) Anmeldetag: 23.01.2002
(51) Int. Cl.: D21H 27/10, D21H 19/22, D21H 19/18

(54) **Wässrige Polymerdispersionen für Barrierebeschichtungen**

(30) Priorität: 24.01.2001 DE 10103065
(71) Anmelder: BASF AKTIENGESELLSCHAFT, 67056 Ludwigshafen (DE)
(72) Erfinder: Schädler, Volker, 68163 Mannheim (DE); Seyffer, Hermann, 69123 Heidelberg (DE); Maas, Heiko, 68165 Mannheim (DE); Keller, Andreas, 67459 Böhl-Iggelheim (DE)
(74) Vertreter: Kinzebach, Werner, Dr.

(57) **Zusammenfassung**

Die Erfindung betrifft die Verwendung wässriger Polymerdispersionen, enthaltend wenigstens ein hydriertes Styrol-Butadien-Copolymer CP, zur Herstellung von Barrierebeschichtungen auf Papier, Pappe oder Karton.

## Beschreibung

Die vorliegende Erfindung betrifft die Verwendung wässriger Polymerdispersionen zur Herstellung von Barrierebeschichtungen aus Papier, Pappe oder Karton.

In der Verpackungsindustrie werden Verpackungsmaterialien auf Basis von Papier, Pappe oder Karton häufig mit einer Beschichtung zur Erhöhung der Wasserdampf- und Aromadichte des Verpackungsmaterials ausgerüstet. Eine derartige Ausrüstung des Verpackungsmaterials wird auch als Barrierebeschichtung bezeichnet. Verpakkungsmaterialien, die mit einer Barrierebeschichtung ausgerüstet sind, finden in vielfältiger Weise Verwendung, beispielsweise zum Verpacken von Lebensmitteln wie Gewürzen, Mehl oder Cerealien, zum Verpacken feuchtigkeitsempfindlicher Verbrauchsgüter wie Waschpulver sowie zum Verpacken von hochwertigen Papieren wie Drucker- und Kopierpapier. Für die Verpackung von Lebensmitteln ist ausserdem die Aromadichte (Aromabarriere) des Verpackungsmaterials ein wichtiges Qualitätskriterium.

Bislang wurden zur Herstellung derartiger Barrierebeschichtungen Polyvinylidenchlorid (PVDC) oder Mischpolymerisate des Vinylidendichlorids eingesetzt. Derartige Materialien sind jedoch im Hinblick auf ihre Umweltverträglichkeit, insbesondere bei ihrer Entsorgung, problematisch. Es hat daher nicht an Versuchen gefehlt, Polyvinylidenchlorid und dessen Mischpolymerisate durch chlorfreie Polymere zu ersetzen. So wurden verschiedentlich Polyvinylacetat, Poly(meth)acrylate, Polyethylen(co)polymere und vergleichbare Substanzen zur Herstellung von Barrierebeschichtungen beschrieben. Die dabei erhältlichen Barrierebeschichtungen weisen jedoch nur unzureichende anwendungstechnische Eigenschaften auf. Insbesondere eine ausreichende Wasserdampfdichtigkeit kann bei diesen Produkten nicht oder nur mittels eines sehr dicken, mehrschichtigen Aufbaus erreicht werden. Für diesen Anwendungszweck sind daher die vorgenannten Produkte nicht akzeptabel. Verpakkungsmaterialien, die mit einem Polyethylen/Aluminium-Verbund ausgerüstet sind, weisen zwar gute Anwendungseigenschaften auf, sind jedoch ebenfalls wirtschaftlich nicht akzeptabel und hinsichtlich ihrer Entsorgung problematisch.

Verschiedentlich wurde die Verwendung wässriger Polymerdispersionen auf Basis von Styrol-Butadien-Copolymerisaten zur Herstellung von Barrierebeschichtungen auf Papier beschrieben. Die so erhaltenen Produkte weisen jedoch nur eine mäßige Wasserdampfdichtigkeit aus. Außerdem zeigen derartige Produkte bei längeren Lagerzeiten starke Vergilbungsneigungen, die auf thermische und/oder durch UV-Strahlung induzierte Alterungsprozesse des Polymeren zurückzuführen sind.

Die EP-A 393451 beschreibt wässrige Zubereitungen, die Styrol/Butadien-Copolymerdispersionen und wenigstens ein Paraffinwachs enthalten. Aus diesen Zubereitungen lassen sich Barrierebeschichtungen mit verbesserter Wasserdampfdichte herstellen. Diese Beschichtungen neigen jedoch zur Vergilbung beim Lagern, insbesondere unter Einwirkung von UV-Strahlung oder thermischer Belastung. Eine Vergilbung ist jedoch nicht zuletzt aus ästhetischen Gründen unerwünscht. Außerdem führen derartige Alterungsprozesse zu einer Verschlechterung der Gebrauchseigenschaften des Verpakkungsmaterials, z. B. der Siegel-Eigenschaften, die beim Verpakken der Verbrauchsgüter eine wichtige Rolle spielen. Zudem besteht die Gefahr, daß durch diese Alterungsprozesse die Wasserdampfdichtigkeit der Barrierebeschichtung herabgesetzt wird.

Der vorliegenden Erfindung liegt somit die Aufgabe zugrunde, Beschichtungsmittel für die Herstellung von Barrierebeschichtungen bereitzustellen, die eine gute Wasserdampfdichtigkeit aufweisen und eine geringere Tendenz zum Vergilben zeigen.

Diese Aufgabe wird durch wässrige Polymerdispersionen auf der Basis von hydrierten Styrol-Butadien-Copolymeren CP gelöst.

Demnach betrifft die vorliegende Erfindung die Verwendung wässriger Polymerdispersionen, die wenigstens ein hydriertes Styrol-Butadien-Copolymer CP enthalten, zur Herstellung von Barrierebeschichtungen auf Papier, Pappe oder Karton.

Unter Styrol-Butadien-Copolymeren versteht man hier und im Folgenden nicht nur solche Copolymere, die ausschließlich aus Styrol und Butadien aufgebaut sind, sondern auch Copolymere, die neben Styrol noch weitere vinylaromatische Monomere, und neben Butadien noch weitere konjugierte Diolefine, sowie die für diese Substanzklasse üblichen weiteren Comonomere einpolymerisiert enthalten können.

Unter hydrierten Styrol-Butadien-Copolymeren CP versteht man solche Copolymere auf Basis der zuvor genannten Styrol-Butadien-Copolymere, in denen die ethylenisch ungesättigten Doppelbindungen, die aus einpolymerisiertem Butadien bzw. den einpolymerisierten Dienen resultieren, wenigstens teilweise, in der Regel zu wenigstens 50 Mol-%, und insbesondere zu wenigstens 70 Mol-%, bezogen auf die Gesamtmenge der ethylenisch ungesättigten Doppelbindungen, hydriert vorliegen. Der Anteil der hydrierten Doppelbindungen, bezogen auf die olefinischen Doppelbindungen im zugrunde liegenden, nicht hydrierten Styrol-Butadien-Copolymeren wird auch als Hydrierungsgrad bezeichnet. Dementsprechend beträgt der Hydrierungsgrad des Copolymeren CP in der Regel wenigstens 50 %, und bevorzugt wenigstens 70 %. Besonders bevorzugt weisen die hydrierten Styrol-Butadien-Copolymerisate CP einen Hydrierungsgrad von wenigstens 80 % auf.

Für die erfindungsgemäße Verwendung der Erfindung hat es sich weiterhin als vorteilhaft erwiesen, wenn die Glasübergangstemperatur des hydrierten Copolymerisats einen Wert von -50° C nicht unterschreitet. Außerdem ist es für die Siegelfähigkeit von Vorteil, wenn die Glasübergangstemperatur einen Wert von +50° C nicht überschreitet. Vorzugsweise liegt die Glasübergangstemperatur des Copolymeren CP im Bereich von -40° C bis +40° C, und insbesondere im Bereich von -30° C bis +30° C. Die hier angegebenen Glasübergangstemperaturen entsprechen den Werten, die sie durch die "Mid-Point-Methode" nach ASTM D 3418,823 mittels DSC (Differential-Kalorimetrie) bestimmt wurden. Bei einer Glasübergangstemperatur unterhalb der angegebenen Werte besteht die Gefahr, daß die beschichteten Verpackungsmaterialien keine ausreichende Blockfestigkeit aufweisen und daher miteinander verkleben. Bei einer Glasübergangstemperatur oberhalb der angegebenen Werte ist in der Regel eine ausreichende Siegelfähigkeit nicht mehr gewährleistet.

Die Glasübergangstemperatr des hydrierten Styrol-Butadien-Copolymeren CP hängt in ähnlicher Weise wie die Glasübergangstemperatur des nichthydrierten Styrol-Butadien-Copolymeren von dem Verhältnis der einpolymerisierten Butadien-Einheiten (bzw. der einpolymerisierten, konjugierten Dien-Monomere) zu den einpolymerisierten Styrol-Monomereinheiten (bzw. einpolymerisierten vinylaromatischen Monomereinheiten) ab. In der Regel liegt daher das Gewichtsverhältnis von Struktureinheiten, die sich von einpolymerisierten Diolefinen ableiten, zu den Struktureinheiten, welche sich von einpolymerisierten vinylaromatischen Monomeren ableiten, im Bereich von 1:4 bis 7:3, vorzugsweise im Bereich von 1:2 bis 1,7:1.

Für die erfindungsgemäße Verwendung sind hydrierte copolymere CP bevorzugt, die von einem Styrol-Butadien-Copolymeren abgeleitet sind, das aufgebaut ist aus
i) 20 bis 70 Gew.-%, insbesondere 30 bis 65 Gew.-% wenigstens eines Monomeren A, ausgewählt unter Butadien und Isopren,
ii) 30 bis 80 Gew.-%, insbesondere 35 bis 70 Gew.-% wenigstens eines Monomeren B, ausgewählt unter Styrol und dessen Mischungen mit anderen vinylaromatischen Monomeren, mit Acrylnitril und/oder mit Methacrylnitril,
iii) bis 20 Gew.-%, z. B. 0,1 bis 20 Gew.-%, vorzugsweise 0,5 bis 10 Gew.-%, und insbesondere 0,5 bis 5 Gew.-% eines oder mehrerer, von den Monomeren A und B verschiedener Comonomere C.

Vorzugsweise enthält das Styrol-Butadien-Copolymer Butadien als alleiniges Monomer A. Bevorzugte Monomere B sind Styrol und dessen Mischungen mit bis zu 20 Gew.-%, bezogen auf das Gesamtgewicht der Monomere A bis C, Acrylnitril und/oder Methacrylnitril. Besonders bevorzugt ist Styrol alleiniges Comonomer B.

Beispiele für Monomere C sind ethylenisch ungesättigte Carbonsäuren mit vorzugsweise 3 bis 8 C-Atomen, wie Acrylsäure, Methacrylsäure, Itaconsäure und Maleinsäure, ethylenisch ungesättigte Sulfonsäuren und deren Salze, z. B. Vinyl- und Allyl-Sulfonsäure, Styrolsulfonsäure, 2-Acryloxyethylsulfonsäure und 2-Acrylamido-2-methylpropansulfonsäure bzw. deren Salze, insbesondere deren Natrium-Salze, weiterhin ethylenisch ungesättigte Carbonsäureamide wie Acrylamid, Methacrylamid, N-Alkylolacrylamid und N-Alkylolmethacrylamid, z. B. N-Methylolacrylamid und N-Methylolmethacrylamid und die Hydroxyalkylester der zuvor genannten ethylenisch ungesättigten Carbonsäuren, z. B. Hydroxyethylacrylat, Hydroxypropylacrylat, Hydroxybutylacrylat, Hydroxyethylmethacrylat, Hydroxypropylmethacrylat und Hydroxybutylmethacrylat. Bevorzugt umfassen die Monomere C wenigstens eine ethylenisch ungesättigte Carbonsäure mit 3 bis 8 C-Atomen, insbesondere Acrylsäure, Methacrylsäure oder Itaconsäure (carboxylierte Styrol-Butadien Latices), vorzugsweise in einer Menge von 0,5 bis 10 Gew.-%, insbesondere 1 bis 5 Gew.-%, bezogen auf das Gesamtgewicht der Monomere A + B + C.

Wässrige Dispersionen hydrierter Styrol-Butadien-Copolymere CP sind aus dem Stand der Technik bekannt, beispielsweise aus der DE-A 19753302 und der DE-A 19924340. Ihre Herstellung erfolgt durch Hydrieren einer wässrigen Dispersion eines Styrol-Butadien-Copolymeren in Gegenwart eines Hydrierkatalysators. Dabei weist das zu hydrierende Styrol-Butadien-Copolymer in der Regel die oben genannte Zusammensetzung auf.

Der Hydrierkatalysator ist in der Regel eine Komplexverbindung oder ein Salz des Rutheniums und/oder des Rhodiums und umfasst in der Regel zusätzlich eine nicht ionische, phosphorhaltige Verbindung, die eine koordinative Bindung mit dem Übergangsmetall ausbilden kann (im Folgenden phosphorhaltiger Ligand).

Zu den Salzen und den Komplexverbindungen des Rutheniums bzw. des Rhodiums, die noch keinen phosphorhaltigen Liganden aufweisen, zählen die Hydride, Oxide, Sulfide, Nitrate, Sulfate, Halogenide, z. B. die Chloride, Carboxylate, z. B. die Acetate, Propionate oder Hexanoate, die Salze mit Organo-Sulfonsäuren sowie gemischte Salze, d. h. Salze mit verschiedenen Anionen, z. B. die Oxychloride des Rutheniums oder Rhodiums.

Weiterhin eignen sich Salze von komplexen Ionen des Rhodiums und/oder Rutheniums, beispielsweise die Salze der Rhodium- bzw. der Rutheniumsauerstoffsäuren, die Salze von Halogenoruthenaten und Halogenorhodaten, insbesondere die Chlororuthenate und Chlororhodate, die Ammin- und Aquokomplexe der Rhodiumhalogenide und der Rutheniumhalogenide, insbesondere der Chloride, sowie die Salze von Nitroruthenaten, Ruthenium(III)chlorid, Ruthenium(III)nitrosylchlorid, Ammoniumpentachloroaquoruthenat(III), Hexamminruthenium(II)- und -ruthenium(III)chlorid, Dichlorobis(2,2'-dipyridyl)ruthenium(II), Tris(2,2'-dipyridyl)ruthenium(II)chlorid, Pentamminchlororuthenium(III)chlorid, Kaliumpentachloronitrosylruthenium(II), Ruthenium(IV)oxid, Tetraacetatochlorodiruthenium(II,III), Hexakisacetatotriaquo-µ-oxotriruthenium(III)acetat, Rhodium(III)chlorid, Rhodium(III)hydroxyd, Rhodium(III)nitrat, Rhodium(III)sulfat, Ammoniumpentachloroaquorhodat(III), Kaliumpentachlororhodat(III), Natriumhexachlororhodat(III), Triammintrichlororhodium(III), Trisethylendiaminrhodium(III)chlorid, Rhodium(II)acetat-Dimer, Hexakisacetatotriaquo-µ-oxotrisrhodium(III), Rhodium(III)hydroxid, Rhodium(IV)oxid und Kaliumhexanitrorhodat(III).

Ebenfalls geeignet sind neutrale Komplexe des Rhodiums sowie des Rutheniums. Hierbei sei angemerkt, dass die Übergänge zwischen Salzen des Rutheniums bzw. Rhodiums sowie salzartigen und neutralen Komplexen fließend sind und die vorliegende Einteilung nur ordnenden Charakter hat. Beispiele für neutrale Komplexe, die keine phosphorhaltige Verbindung enthalten, sind die 2,4-Pentandionate des Rhodiums und des Rutheniums wie Ruthenium(III)tris-2,4-pentandionat, Rhodium(I)dicarbonyl-2,4-pentandionat, Rhodium(III)tris-2,4-pentandionat, Bisethylenrhodium(I)-2,4-pentandionat und Norbornadienrhodium(I)-2,4-pentandionat, die Carbonylkomplexe des Rutheniums und des Rhodiums wie Dodecacarbonyltetrarhodium, Hexadecacarbonylrhodium, Tetracarbonyldi-µ-chlorodirhodium(I) und Dodecacarbonyltriruthenium.

Als phosphorhaltige Liganden kommen organische, phosphorhaltige Verbindungen in Betracht, worin die Phosphoratome dreiwertig sind. Sie enthalten vorzugsweise ein oder zwei Phosphoratome.

Beispiele für bevorzugte phosphorhaltige Liganden sind die Verbindungen der allgemeinen Formel I

PR₃ (I)

und die Verbindungen der Formel II

R₂P-(O)ₓ-A-(O)_{y}-PR₂ (II)

worin
- R: gleich oder verschieden sein kann und unabhängig voneinander für C₁-C₁₀-Alkyl, C₄-C₁₂-Cycloalkyl, gegebenenfalls durch C₁-C₄-Alkyl, C₁-C₄-Alkoxy, halogensubstituiertes Phenyl, C₁-C₁₀-Alkyloxy, C₄-C₁₂-Cycloalkyloxy und Aryloxy oder Fluor steht, oder zwei Reste R gemeinsam C₃-C₆-Alkylen, C₃-C₆-Alkenylen oder C₃-C₆-Alkadienylen bedeuten,
- A: einen bivalenten Kohlenwasserstoffrest mit bis zu 25 C-Atomen bedeutet, und
- x, y: unabhängig voneinander für 0 oder 1, und vorzugsweise für 0 stehen.

A steht beispielsweise für lineares oder verzweigtes C₂-C₆-Alkylen wie 1,2-Ethylen, 1,2- bzw. 1,3-Propylen, 2,3-Butylen, 2,2-Dimethyl-1,3-propylen, Butan-1,4-diyl, das gegebenenfalls substituiert und/oder Teil eines Carbocyclus oder eines Heterocyclus ist, z.B. wie in 2,3-(1',3'-Dioxa-2',2'-dimethylpropan-1',3'-diyl)butan-1,4-diyl und trans- oder cis-Norbornan-1,2-diyl. A steht weiterhin auch für zweiwertige mono-, bi- oder tricyclische Reste mit Phenyl-, Naphthyl- oder Anthracenylgruppen und umfasst insbesondere o-Phenylen, o,o-Diphenylen, (o,o-Diphenylen)methan, 2,2-(o,o-Diphenylen)propan, (o,o-Diphenylen)ether, 1,8-Naphthylen, 2,2'-Binaphthylen, 1,1'-Ferrocenylen, 1,9-Anthracenylen, 1,9-Xanthenylen, wobei die Phenylen-, Naphthylen- oder Anthracenylengruppen teilweise oder vollständig halogeniert sein können und/oder einen oder mehrere Substituenten, ausgewählt unter C₁-C₄-Alkyl, C₁-C₄-Alkyloxy, Amino, Di-C₁-C₄-alkylamino und Hydroxy, das gegebenenfalls auch ethoxyliert sein kann, aufweisen können.

Bevorzugte Reste R sind Methyl, Ethyl, n-Propyl, Isopropyl, n-Butyl, 2-Butyl, Isobutyl, tert.-Butyl, n-Hexyl, Cyclohexyl, Cyclopentyl, Phenyl, o-, m- oder p-Tolyl, p-Chlorphenyl, p-tert.-Butylphenyl und p-Hydroxyphenyl, insbesondere n-Butyl, 2-Butyl, Isobutyl, tert.-Butyl, Cyclohexyl und Phenyl.

Beispiele für bevorzugte Verbindungen der Formel I sind Triphenylphosphin, Triisopropylphosphin, Tri-n-butylphosphin, Tri-n-octylphosphin, Tricyclopentylphosphin, Tricyclohexylphosphin, Trisanisylphosphin, Tris(p-tolyl)phosphin, Triethylphosphit, Tri-n-butylphosphit und Dibenzophosphol. Beispiele für bevorzugte Verbindungen der Formel II sind 1,2-Bis(diphenylphosphino)ethan, 1,3-Bis(diphenylphosphino)propan, 1,1'-Bis(diphenylphosphino)ferrocen, 2,2'-Bis(diphenylphosphino)-1,1'-biphenyl und 2,2'-Bis(diphenylphosphino)-1,1'-binaphthyl. Weitere Beispiele für Verbindungen der allgemeinen Formel II finden sich in WO 97/33854, Angew. Chem. 1999, 111 S. 349; Applied Homogeneous Catalysis with Organometallic Compounds, Vol. 1 (Hrsg., B. Cornils, W.A. Herrmann) VCH Weinheim, New-York 1996.

Komplexe des Rutheniums mit wenigstens einer phosphorhaltigen Verbindung gehorchen vorzugsweise der allgemeinen Formel III:

Ru X¹X² (CO)ₖ (L¹)ₗ (L²)₂ (III)

worin
- X¹ und X²: unabhängig voneinander für Wasserstoff, Halogen, vorzugsweise Chlorid, das Anion einer Carbonsäure, z. B. Acetat, Benzoat oder Hexanoat oder einer Sulfonsäure, z. B. Phenylsulfonat, Acetylacetonat, Phenyl, das gegebenenfalls substituiert ist, stehen,
- k und l: unabhängig voneinander für 0, 1 oder 2 stehen, mit der Maßgabe, dass k + l = 1 oder 2 ist,
- L¹: ausgewählt ist unter Carbonyl, Pyridin, Benzonitril, Dibenzophosphol, Cycloolefinen und einem Liganden der allgemeinen Formel PR₃, worin R die zuvor genannten Bedeutungen hat, und
- L²: für einen phosphorhaltigen Liganden der Formel I steht und (L²)₂ auch für einen phosphorhaltige Liganden der Formel II stehen kann.

Komplexe des Rhodiums mit wenigstens einer phosphorhaltigen Verbindung gehorchen vorzugsweise der allgemeinen Formel IV:

Rh Xₘ L³ L⁴ (L⁵)ₙ (IV)

worin
- X: für Halogenid, vorzugsweise Chlorid oder Bromid, das Anion einer Carbonsäure, Acetylacetonat, Aryl- oder Alkylsulfonat, Hydrid oder das Diphenyltriazinanion steht,
- L³, L⁴ und L⁵: unabhängig voneinander für CO, Olefine, Cycloolefine, Benzonitril, einen phosphorhaltigen Liganden der Formel I oder II,
- m: für 1 oder 2 und n für 0, 1 oder 2 stehen,
mit der Maßgabe, dass wenigstens einer der Liganden L³, L⁴ und L⁵ für einen der oben genannten phosphorhaltigen Liganden der allgemeinen Formel I oder II steht.

X bzw. X¹ oder X² stehen in Formel III oder IV vorzugsweise für Hydrid, Chlorid, Bromid, Acetat, Tosylat, Acetylacetonat oder das Diphenyltriazin-Anion, insbesondere für Hydrid, Chlorid oder Acetat.

Beispiele für geeignete Phosphinkomplexe der allgemeinen Formeln III und IV sind:
Carbonylchlorohydridobis(tricyclohexylphosphin)ruthenium(II), Carbonylchlorohydridobis(triisopropylphosphin)ruthenium(II), Carbonylchlorohydridobis(triphenylphosphin)ruthenium(II), Carbonylchlorostyrylbis(tricyclohexylphosphin)ruthenium(II), Carbonylchlorostyrylbis(triisopropylphosphin)ruthenium(II), Carbonylchlorobenzoatobis(triphenylphosphin)ruthenium(II), Dichlorotris(triphenylphosphin)ruthenium(II), Bis(triphenylphosphin)rutheniumdicarbonylchlorid, Acetatohydridotris(triphenylphosphin)ruthenium(II), Chlorotris(triphenylphos-phin)rhodium(I), Hydridotetrakis(triphenylphosphin)rhodium(I), Hydridotris(dibenzophosphol)rhodium(I).

Zur Durchführung der Hydrierung wird man zunächst den Hydrierkatalysator in geeigneter Weise in die wässrige Polymerdispersion des zu hydrierenden Styrol-Butadien-Copolymeren einarbeiten. Beispielsweise kann man den Hydrierkatalysator oder die einzelnen Bestandteile des Hydrierkatalysators separat oder als Mischung als Feststoffe und/oder als Lösungen zu der Polymerdispersion geben. Außerdem kann man den Hydrierkatalysator, vorzugweise jedoch die Rhodium- und/oder Rutheniumverbindung ohne Phosphorliganden bei der Herstellung der Polymerdispersion, also bei der Polymerisation der das Styrol-Butadien-Copolymer konstituierenden Monomere, zugeben. Anschließend gibt man dann, sofern erforderlich, die phosphorhaltige Verbindung zu der zu hydrierenden Polymerdispersion.

Die erforderlichen Mengen an Katalysator, bezogen auf die zu hydrierende Polymerdispersion, betragen in der Regel 1 bis 1000 ppm, vorzugsweise 5 bis 500 ppm Ruthenium und/oder Rhodium, bezogen auf das Gesamtgewicht des zu hydrierenden Polymeren. Das molare Verhältnis von phosphorhaltiger Verbindung zum Metallatom liegt in der Regel im Bereich von 1:10 bis 100:1, vorzugsweise im Bereich von 1:2 bis 50:1.

Vorzugsweise stellt man bei der zu hydrierenden Polymerdispersion einen Feststoffgehalt, bezogen auf das darin enthaltene Styrol-Butadien-Copolymerisat, von etwa 20 bis 60 Gew.-% ein.

Die katalysatorhaltige Dispersion wird dann zur Hydrierung in einem geeigneten Reaktionsgefäß mit Wasserstoff beaufschlagt, wobei man zuvor gegebenenfalls Sauerstoff, beispielsweise durch Spülen des Reaktionsgefäßes mit einem Inertgas wie Stickstoff, inertisiert. Die Hydrierung erfolgt in der Regel bei einem Partialdruck des Wasserstoffs im Bereich von 0,5 bis 600 bar, vorzugsweise 50 bis 400 bar, insbesondere 100 bis 300 bar. Die Reaktionstemperatur liegt in der Regel im Bereich von 20 bis 250 °C, vorzugsweise 50 bis 200 °C, insbesondere 100 bis 180 °C. Die Reaktionsdauer liegt in der Regel im Bereich von 1 bis 50 Stunden, vorzugsweise 2 bis 40 Stunden und insbesondere 3 bis 30 Stunden.

Die Hydrierung wird in der Regel so lange durchgeführt, bis der gewünschte Hydriergrad erreicht ist. Dieser kann vom Fachmann, beispielsweise mittels IR-Spektroskopie, anhand der für die ethylenisch ungesättigten Doppelbindungen typischen Banden im Bereich von 900 bis 1000 cm⁻¹ ermittelt werden.

Die auf diese Weise hydrierten Styrol-Butadien-Copolymerdispersionen CP zeichnen sich dadurch aus, daß lediglich die in ihnen enthaltenen ethylenisch ungesättigten Doppelbindungen hydriert wurden. Andere hydrieraktive Doppelbindungen, beispielsweise aromatische C=C-Doppelbindungen, Carbonylgruppen, Nitrilfunktionen u. ä. werden nicht oder nicht in nennenswerter Weise hydriert.

Die zu hydrierenden wässrigen Polymerdispersionen von Styrol-Butadien-Copolymeren sind aus dem Stand der Technik bekannt oder können nach den dort beschriebenen Verfahren hergestellt werden. In der Regel erfolgt ihre Herstellung durch radikalische, wässrige Emulsionspolymerisationen der vorgenannten Monomere in Gegenwart von Polymerisationsinitiatoren und oberflächenaktiven Substanzen. Diese Verfahren sind dem Fachmann hinreichend bekannt und in der Literatur ausführlich beschrieben, beispielsweise in Ullmanns Encyclopedia of Industrial Chemistry, 1^{st} Ed., Vol. A21, p. 373-393.

Wegen weiterer Details zur Herstellung der zu hydrierenden Polymerdispersionen wie auch zur Herstellung der hydrierten Polymerdispersionen des Copolymeren CP wird auf die eingangs erwähnten Schriften DE 19753302 und DE 19924340 Bezug genommen.

In den erfindungsgemäß zur Anwendung kommenden wässrigen Polymerdispersionen liegt das hydrierte Styrol-Butadien-Copolymer CP in einer im wässrigen Dispergiermedium fein verteilten Form vor. In der Regel weisen die Polymerteilchen des hydrierten Styrol-Butadien-Copolymeren gewichtsmittlere Polymerteilchengrößen unterhalb 1 µm, vorzugsweise im Bereich von 50 bis 500 nm, und besonders bevorzugt im Bereich von 100 bis 400 nm, auf.

Als wässriges Dispergiermedium kommen neben Wasser auch Mischungen von Wasser mit organischen Lösungsmitteln, die vorzugsweise mit Wasser mischbar sind, in Betracht. Der Anteil dieser Lösungsmittel wird in der Regel 20 Gew.-%, vorzugsweise 10 Gew.-%, und insbesondere 5 Gew.-% des Dispergiermediums nicht überschreiten. Insbesondere ist das Wasser, abgesehen von solchen Lösungsmittelmengen, die gegebenenfalls zur Einarbeitung des Hydrierkatalysators in die wässrige Polymerdispersion verwendet werden, alleiniges Dispergiermedium. Selbstverständlich enthalten die wässrigen Polymerdispersionen auch die zur Hydrierung verwendeten oberflächenaktiven Substanzen.

Zu den oberflächenaktiven Substanzen zählen sowohl die hierfür üblichen Emulgatoren als auch Schutzkolloide und deren Mischungen. Der Anteil der oberflächenaktiven Substanzen, bezogen auf das hydrierte Styrol-Butadien-Copolymer CP, liegt in der Regel im Bereich von 0,5 bis 10 Gew.-%. Eine Übersicht über geeignete Emulgatoren und Schutzkolloide gibt Houben-Weyl, Methoden der organischen Chemie, Bd. XIV/1, Makromolekulare Stoffe, Georg Thieme-Verlag, Stuttgart 1961, S. 192-208. Geeignet sind sowohl neutrale Emulgatoren wie ethoxylierte Mono-, Di- und Tri-Alkylphenole, ethoxylierte Fettalkohole und anionische Emulgatoren wie die Alkali- und Ammoniumsalze von Fettsäuren, von Alkylsulfaten, von Schwefelsäurehalbestern ethoxylierter Alkanole und von Schwefelsäurehalbestern ethoxylierter Alkylphenole, von Alkylsulfonsäuren, von Alkylarylsulfonsäuren sowie die Alkali- und Ammoniumsalze von alkylierten Bis(phenylsulfonsäure)ethern. Beispiele für geeignete Schutzkolloide sind Polyvinylalkohol, Polyvinylpyrrolidon, amphiphile Blockcopolymere auf Basis von Polyethylenoxid, Polypropylenoxid sowie Phenol- und Naphtalin-Sulfonsäure-Formaldehyd-Kondensationsprodukte.

Die wässrigen Dispersionen hydrierter Styrol-Butadien-Copolymere CP können als solche oder in Form einer konfektionierten, wässrigen Zubereitung angewendet werden. Unter einer konfektionierten wässrigen Zubereitung versteht man Abmischungen der wässrigen Polymerdispersionen der hydrierten Copolymere CP mit Formulierungshilfsmitteln und/oder Füllstoffen, wie sie üblicherweise zur Herstellung von Wasserdampf- und Aroma-Barrierebeschichtungen verwendet werden.

Beispiele für übliche Hilfsstoffe sind neben den zur Herstellung der Dispersionen eingesetzten Emulgatoren und Schutzkolloiden Entschäumer, Verdicker, Biozide, Dispergierhilfsmittel, ggf. Lösungsmittel und Weichmacher. Die Hilfsstoffe werden in den hierfür üblichen Mengen eingesetzt. In der Regel werden sie einen Gewichtsanteil von 10 Gew.-%, bezogen auf das in der Zubereitung enthaltene, hydrierte Copolymer CP nicht überschreiten.

Beispiele für geeignete Füllstoffe sind feinteilige anorganische Materialien wie Calciumcarbonate, z.B. in Form von Kreide, Talk, Silikate, Alumosilikate, Calciumsulfate, weiterhin Wachse. Sofern erwünscht, wird der Anteil der Füllstoffe in der Zubereitung 100 Gew.-Teile, bezogen auf 100 Gew.-Teile Polymerisat nicht überschreiten. In einer bevorzugten Ausführungsform der Erfindung enthalten die konfektionierten Zubereitungen keine der sogenannten Hilfs- oder Füllstoffe.

In einer anderen Ausführungsform der vorliegenden Erfindung kommen die wässrigen Dispersionen der hydrierten Styrol-Butadien-Copolymere CP in Form einer wässrigen Zubereitung zur Anwendung, die neben dem hydrierten Styrol-Butadien-Copolymeren CP wenigstens ein Wachs in dispergierter Form enthalten. Darüber hinaus können diese wässrigen Zubereitungen selbstverständlich auch die oben genannten Hilfsmittel und/oder anorganische Füllstoffe in den vorstehend angegebenen Mengen enthalten. Bevorzugt enthalten jedoch die wässrigen Zubereitungen außer den hydrierten Styrol-Butadien-Copolymeren und dem Wachs keine weiteren Füllstoffe.

Beispiele für geeignete Wachse sind Mineralwachse wie Cevesin oder Ozokerit, petrochemische Wachse wie Paraffinwachse oder Mikrowachse, Montanesterwachse, synthetische Wachse wie Polyethylen-und Polypropylenwachse sowie Polyethylenglykolwachse sowie Wachse pflanzlichen oder tierischen Ursprungs, z.B. Bienenwachs oder Carnauba-Wachs. Bevorzugte Wachse sind Paraffinwachse.

Sofern die wässrigen Zubereitungen ein Wachs enthalten, liegt sein Anteil in der Regel im Bereich von 5 bis 100 Gew.-Teilen, vorzugsweise 10 bis 60 Gew.-Teilen, bezogen auf 100 Gew.-Teile hydriertes Styrol-Butadien-Copolymer CP. Derartige Zubereitungen sind neu und ebenfalls Gegenstand der vorliegenden Erfindung.

Die vorliegende Erfindung betrifft außerdem Verpackungsmaterialien aus Papier, Pappe oder Karton, die mit einer Barrierebeschichtung auf Basis eines hydrierten Styrol-Butadien-Copolymeren ausgerüstet sind, sowie ein Verfahren zu ihrer Herstellung.

Die Herstellung derartiger Verpackungsmaterialien erfolgt nach an sich bekanntem Verfahren, indem man eine wässrige Zubereitung, die wenigstens ein hydriertes Styrol-Butadien-Copolymer CP in Form seiner wässrigen Dispersion sowie gegebenenfalls wenigstens ein Wachs, vorzugsweise ein Paraffinwachs in Form seiner wässrigen Dispersion, und gegebenenfalls Hilfsstoffe und/oder Füllstoffe umfaßt, auf das zu beschichtende Substrat aufbringt und anschließend trocknet.

Als Substrat sind grundsätzlich alle Papiere, Kartons und Pappen unterschiedlichster Grammatur, Glätte oder Porosität geeignet. Beispiele für geeignete Substrate sind alle handelsüblichen Papiere mit Flächengewichten im Bereich von 60 g/m² bis 150 g/m² sowie handelsübliche Kartonagen mit Flächengewichten im Bereich von 150 bis 250 g/m².

Das Aufbringen der Beschichtung, d. h. der wässrigen Zubereitung bzw. der Polymerdispersion des hydrierten Styrol-Butadiencopolymeren CP erfolgt mit herkömmlichen Mitteln wie Luftbürsten, Rakeln oder reversen Gravur-Systemen. Die Trocknung kann beispielsweise durch Kontakt- oder Schwebetrocknung erfolgen. Die Trocknungstemperaturen liegen in der Regel oberhalb 50°C, vorzugsweise oberhalb 80°C, z. B. im Bereich von 50 bis 250°C, insbesondere im Bereich von 80 bis 200°C und speziell 100 bis 180°C.

In der Regel erreicht man eine ausreichende Barrierewirkung für Wasserdampf bereits bei geringen Auftragsmengen (Strichgewichten). Meist wird man die wässrigen Zubereitungen, umfassend wenigstens ein hydriertes Styrol-Butadien-Copolymer CP mit einem Strichgewicht von 1 bis 50 g/m², vorzugsweise im Bereich von 2 bis 30 g/m², und insbesondere im Bereich von 5 bis 20 g/m² auf die zu beschichtende Oberfläche aufbringen.

Die so erhaltenen, beschichteten Verpackungsmaterialien zeichnen sich durch eine höhere Wasserdampfdichte aus. Außerdem weisen sie eine verbesserte Witterungsbeständigkeit und eine geringere Neigung zum Vergilben auf. Das Blockverhalten sowie das Siegelverhalten und die Fettdichte sind mit denen konventioneller Barrierebeschichtungen auf Basis von Styrol-Butadien-Copolymeren vergleichbar.

Die folgenden Beispiele sollen die Erfindung erläutern, ohne sie jedoch einzuschränken.

### I. Herstellung der zu hydrierenden Styrol-Butadien-Copolymerdispersionen

Allgemeine Herstellungsvorschrift:

In einem Polymerisationsgefäß legte man 3,8 kg Wasser und Saatlatex (Polystyrolsaat, 30 nm) vor und erwärmte auf 90°C. Hierzu gab man 6 g Natriumperoxodisulfat und 5 Gew.-% der Monomeremulsion. Anschließend gab man, zeitgleich beginnend, unter Beibehaltung der Temperatur über separate Zuläufe 1900 g einer 6 gew.-%igen, wässrigen Natriumperoxodisulfatlösung und die Restmenge der Monomeremulsion innerhalb von 4,5 Std. in das Polymerisationsgefäß. Anschließend polymerisierte man eine weitere Stunde unter Beibehaltung der Temperatur. Danach reduzierte man den Gehalt der Restmonomere auf einen Wert unterhalb 10 ppm durch kombinierte chemische und physikalische Desodorierung.

Die Monomeremulsion wies die folgende Zusammensetzung auf:
- 14,25 kg eines Monomerengemischs aus Butadien und Styrol
- X g Terpinolen (siehe Tabelle 1)
- 440 g Acrylsäure
- 120 g Natriumlaurylsulfat
- Y g Ruthenium (III)tris-2,4-pentandionat (siehe Tabelle 1)
- 7,7 kg Wasser.

Die Mengen der Einsatzstoffe sind in Tabelle 1 angegeben.

**Tabelle 1**

| Dispersion | S/Bu¹⁾ | Ru(III)acac₃²⁾ [g] | Terpinolen (g] | Tg³ [°C] |
|---|---|---|---|---|
| D1 | 1,85:1 | 0 | 167 | 13 |
| D2 | 1,41:1 | 0,6 | 124 | 5 |
| D3 | 1:1,64 | 0,6 | 116 | -30 |

| | | | | |
|---|---|---|---|---|
| ¹⁾ Gewichtsverhältnis Styrol/Butadien | | | | |
| ²⁾ Ru(III)acac₃ = Ruthenium(III)tris-2,4 pentandionat | | | | |
| ³⁾ Glasübergangstemperatur (mid-point-Wert, bestimmt mittels DSC) | | | | |

### II. Hydrierung der Styrol-Butadien-Dispersionen

### Hydrierte Dispersion HD1

1113 g der Polymerdispersion D1 wurden mit 487 g entionisiertem und entgastem Wasser auf einen Feststoffgehalt von 35 Gew.-% eingestellt. Hierzu gab man 1,02 g einer Lösung von 2,54 g tri-n-Butylphosphin und 1,25 g Ruthenium(III)tris-2,4-pentandionat in 25 ml Toluol. Die Mischung wurde 16 Stunden bei Raumtemperatur gerührt und anschließend in einen Autoklaven überführt. Nach Inertisieren wurde ein Wasserstoffdruck von 100 bar aufgepreßt. Man erwärmte auf 150°C. Sobald die Temperatur erreicht war, erhöhte man den Wasserstoffdruck auf 280 bar und behielt ihn 15 Std. bei. Nach Beendigung der Reaktionszeit wurde der Autoklav abgekühlt, entspannt und entleert. Die Eigenschaften der hydrierten Dispersionen sind in Tabelle 2 angegeben.

**Tabelle 2**

| Hydrierte Dispersion | Ausgangsdispersion | Hydriergrad¹⁾ [%] | Tg²⁾ [°C] |
|---|---|---|---|
| HD1 | D1 | 81 | 14 |
| HD2 | D2 | 84 | 2 |
| HD3 | D3 | >95 | -23 |

| | | | |
|---|---|---|---|
| ¹⁾ Bestimmt mittels IR-Spektrometrie | | | |
| ²⁾ Glasüberganstemperatur | | | |

### Hydrierte Dispersion HD2

Die Umsetzung erfolgt ausgehend von Dispersion D2 analog der Umsetzung von Dispersion D1, jedoch wurde mit entionisiertem Wasser ein Feststoffgehalt von 30 Gew.-% eingestellt und 36 mg festes Tri-n-butylphosphin anstelle der toluolischen Katalysatorlösung zugegeben.

### Hydrierte Dispersion HD3

Die Umsetzung erfolgte ausgehend von Dispersion D3 analog zur Umsetzung von Dispersion D2.

### III. Anwendungstechnische Prüfung

1. Die Herstellung der Proben erfolgte durch Aufbringen der Dispersionen mit üblichen Beschichtungsvorrichtungen, z.B. der Firma DIXON, Jagenberg oder Pagendarm auf Alukraft-Papier, das bereits einen Vorstrich aus einer wässrigen Styrol/Butadien-Dispersion (Epotal D700, BASF AG) mit einer Stärke von etwa 3 g/m² aufwies. Der Auftrag erfolgte mit einer Luftbürste bei einer Auftragsgeschwindigkeit von 30 m/min. Die Vortrocknung und Trocknung erfolgte in beheizten Kanälen bei 140°C. Die Strichstärke der so behandelten Papiere ist in Tabelle 3 angegeben.
2. Bestimmung der Wasserdampfdurchlässigkeit
   Die Bestimmung der Wasserdampfdurchlässigkeit erfolgt in Anlehnung an DIN 53122 bei 23°C und 85 % relativer Luftfeuchte. Die Ergebnisse sind in Tabelle 3 zusammengestellt.
3. Bestimmung der Wasseraufnahme nach Cobb
   Die Bestimmung der Wasseraufnahme erfolgte nach dem Cobb-Verfahren. Die Wasseraufnahme ist definiert als die Wassermenge in g, die von 1 m² Papierfläche in einer bestimmten Zeit aus einer 1 cm hohen Wasserschicht absorbiert wird, die das Papier gleichmäßig bedeckt. Die Probengröße beträgt 12,5 x 12,5 cm, und wurde zuvor hinsichtlich ihres Feuchtigkeitsgehaltes im Normklima konditioniert. In Tabelle 3 ist die Wassermenge angegeben, die innerhalb 30 min absorbiert wurde.

**Tabelle 3**

| Dispersion | Strich g/m² | WDD¹⁾ g/m²/24 h | COBB (30 min) g/m² |
|---|---|---|---|
| D1 | 10 | 41,1 | 2,75 |
| HD1 | 6,6 | 30,5 | 2,64 |
| D2 | 9 | 42,2 | 5,36 |
| HD2 | 10 | 25,2 | 3,4 |
| D3 | 10,3 | 65,4 | 4,3 |
| HD3 | 9,4 | 34,3 | 4,5 |
| 0,8 HD2 + 0,2 Wachs² | 10 | 2,4 | n.B. |

| | | | |
|---|---|---|---|
| ¹⁾ Wasserdampf-Durchlässigkeit | | | |
| ²⁾ Abmischung aus 0,8 Gew.-Teilen Dispersion HD2 und 0,2 Gewichtsteilen eines handelsüblichen Paraffinwachses | | | |

Die mit den hydrierten Styrol-Butadien-Copolymeren beschichteten Papiere waren hinsichtlich ihres Block-Verhaltens, ihrer Öl-Dichte (Porendichte) und ihres Siegelverhaltens mit den Papieren vergleichbar, die mit nicht hydrierten Styrol-Butadien-Copolymerdispersionen beschichtet waren.

## Patentansprüche

1. Verwendung wässriger Polymerdispersionen, enthaltend wenigstens ein hydriertes Styrol-Butadien-Copolymer CP, zur Herstellung von Barrierebeschichtungen auf Papier, Pappe oder Karton.

2. Verwendung nach Anspruch 1, wobei das hydrierte Copolymerisat CP einen Hydrierungsgrad von wenigstens 70 %, bezogen auf ethylenisch ungesättigte Doppelbindungen, aufweist.

3. Verwendung nach Anspruch 1 oder 2, wobei das hydrierte Copolymerisat eine Glasübergangstemperatur im Bereich von -40°C bis +40°C aufweist.

4. Verwendung nach einem der vorhergehende Ansprüche, wobei das hydrierte Copolymer CP abgeleitet ist von einem Styrol-Butadien-Copolymeren, das aufgebaut ist aus:
i) 20 bis 70 Gew.-% wenigstens einem Monomeren A, ausgewählt unter Butadien und Isopren,
ii) 30 bis 80 Gew.-% wenigstens einem Monomeren B, umfassend Styrol, und dessen Mischungen mit anderen vinylaromatischen Monomeren, Acrylnitril und/oder Methacrylnitril,
iii) bis 20 Gew.-% eines oder mehrerer, von den Monomeren A und B verschiedener Monomeren C.

5. Verwendung nach Anspruch 4, wobei das Monomer C ausgewählt ist unter ethylenisch ungesättigten Carbonsäuren, ethylenisch ungesättigten Sulfonsäuren, ethylenisch ungesättigten Carbonsäureamiden und Hydroxyalkylestern ethylenisch ungesättigter Carbonsäuren.

6. Verwendung nach einem der vorhergehende Ansprüche, wobei die Polymerteilchen des hydrierten Copolymers CP in der wässrigen Dispersion einen gewichtsmittleren Teilchendurchmesser im Bereich von 50 nm bis 500 nm aufweisen.

7. Verwendung nach einem der vorhergehende Ansprüche, wobei die wässrige Polymerdispersion des hydrierten Copolymeren CP zusätzlich wenigstens ein in der Wasserphase dispergiertes Wachs enthält.

8. Verwendung nach Anspruch 7, wobei das Wachs ein Paraffinwachs ist.

9. Verfahren zum Beschichten von Papier, Pappe oder Karton, **dadurch gekennzeichnet, dass** man eine wässrige Zubereitung, umfassend wenigstens eine wässrige Polymerdispersion wenigstens eines hydrierten Styrol-Butadien-Copolymeren CP, gegebenenfalls ein in der Wasserphase dispergiertes Wachs sowie gegebenenfalls übliche Hilfmittel und Füllstoffe auf das zu beschichtende Substrat aufbringt und anschließend bei erhöhter Temperatur trocknet.

10. Verfahren nach Anspruch 9, **dadurch gekennzeichnet, dass** man die Polymerdispersion des wenigstens einen Copolymeren CP in einer Trockenbeschichtungsstärke von 1 bis 50 g/m² auf die zu beschichtende Oberfläche aufbringt.

11. Verpackungsmaterial aus Papier, Pappe oder Karton mit einer Barrierebeschichtung auf Polymerbasis, **dadurch gekennzeichnet, dass** das Polymer ein hydriertes Styrol-Butadien-Copolymer CP ist.

12. Wässrige Zubereitung, umfassend wenigstens eine wässrige Polymerdispersion eines hydrierten Styrol-Butadien-Copolymeren CP und wenigstens ein in der Wasserphase dispergiertes Wachs und gegebenenfalls übliche Hilfsmittel und/oder Füllstoffe.
